# EUROPEAN PATENT SPECIFICATION

(11) **EP 3 705 721 B1**
(45) Date of publication and mention of the grant of the patent: **04.05.2022**
(21) Application number: 19161687.9
(22) Date of filing: 08.03.2019
(51) Int. Cl.: F04B 13/00, F04B 15/02, F04B 53/14, F04B 53/08, B29B 13/02, B67D 7/64, F04B 23/02, B05C 11/04

(54) **APPARATUS FOR MELTING AND CONVEYING A MELTABLE MEDIUM RECEIVED IN A CONTAINER**
VORRICHTUNG ZUM SCHMELZEN UND FÖRDERN EINES IN EINEM BEHÄLTER AUFGENOMMENEN SCHMELZBAREN MEDIUMS
APPAREIL DE MÉLANGE ET DE TRANSPORT D'UN MILIEU FUSIBLE REÇU DANS UN RÉCIPIENT

(43) Date of publication of application: 09.09.2020
(73) Proprietor: NORDSON CORPORATION, Westlake, OH 44145-1119 (US)
(72) Inventor: Wagner, Michael, 21379 Neumühlen (DE)
(74) Representative: Eisenführ Speiser

(56) References cited:
- EP-A1- 0 564 807
- GB-A- 1 226 390
- US-A- 3 031 106
- US-A- 4 227 069

## Description

The invention relates to an apparatus for melting and conveying a meltable medium received in a container, in particular a hot melt adhesive received in a drum, comprising a heatable piston for melting and displacing the meltable medium, which piston can be introduced into the container and moved, in particular towards the bottom of the container, wherein the piston has a displacement element for displacing the meltable medium,. Apparatuses for melting and conveying a meltable medium received in a container, for example a drum melter, are generally known. They are used, for example, to melt hot melt adhesives which are usually received in drums, and to transport them from the drum to a metering unit.

The medium is melted by means of a heatable piston in the apparatus. In most cases, the piston has at least one heatable plate with flow channels for the medium. The piston is moved towards the bottom of the container, and the molten, liquefied material is conveyed out of the container by the piston. However, a cavity from which a volumetric flow of the medium can be pumped out by means of a pump, for example, is needed in order to convey the medium. The residual amount of meltable medium remaining in the container must be avoided for environmental and economic reasons.

EP 0 564 807 A1 discloses an apparatus for melting and conveying a meltable medium according to the preamble of claim 1, wherein the apparatus comprises a heatable piston, wherein the piston can be introduced into a container, and wherein the piston comprises a displacement element for displacing the meltable unit received in the container. GB 1 226 390 A shows a dispensing apparatus for viscous materials received in a container, the apparatus comprising a pump tube and a follower plate secured to the lower end of the pump tube and a heating platen fixed to the underside of the follower plate.

The object of the invention is therefore to address at least one of the disadvantages identified in prior art apparatuses of the kind initially specified. More specifically, the object of the invention is to reduce the residual amount of meltable medium remaining in the container in apparatuses of the kind initially specified.

The invention achieves its object with an apparatus having the features of claim 1. In particular, the invention proposes that the piston has a premelter element for melting the meltable medium, and wherein the premelter element is movably mounted relative to the displacement element.

By introducing a heatable piston into a container containing a meltable medium, a liquefied medium can be conveyed out of the container. The medium is melted by a premelter element according to the invention and is not displaced from the interior of the container until the displacement element displaces it. Mounting the premelter element movably relative to the displacement element allows the meltable medium to be melted in regions which are difficult to access, such as the bottom of the container, so that the displacement element can displace such medium.

The melt temperature should be understood here to be the temperature of the at least partially molten medium in the container.

The displacement element is preferably arranged substantially parallel to the premelter element.

An apparatus is thus proposed which provides uniform melting and uniform displacement of the medium by the displacement element and by the premelter element which is arranged parallel thereto.

According to one advantageous development of the invention, the premelter element has at least one recess which is adapted to provide a flow channel for the meltable medium, and the displacement element has at least one corresponding protrusion which can be introduced into the recess of the premelter element.

The invention makes use of the discovery that, by means of recesses which simultaneously provide a flow channel for meltable medium, and by means of corresponding protrusions, it is possible to also displace any material in the recesses by introducing said protrusions into said recesses. The residual amount of meltable medium remaining in the container is thus reduced further.

The height of the protrusions preferably matches the height of the recesses, and the displacement element and the premelter element form a substantially planar surface at the distal end of the piston when the protrusions of the displacement element are introduced into the recess of the premelter element.

By forming a substantially planar surface at the distal end of the piston by means of the protrusions and the recesses, the medium which is present at a substantially planar container bottom is melted almost entirely and can be displaced, in particular. A substantially planar surface is understood here to be a surface which is not entirely planar, due to the edges and transitions of the recesses and protrusions, but which is planar over at least most of its total area. At least 90% of the surface is preferably formed as a planar surface.

It is also preferred that the recesses and the corresponding protrusions are elongate and preferably parallel, in particular lamellar.

An elongate, in particular lamellar design of both the recesses and the corresponding protrusions provides an enlarged surface, with the result that the heat input is increased. A parallel design of these lamellar protrusions and recesses also provides uniform heating of the medium and also uniform flow through the flow channels of the premelter element.

It is also preferred that the protrusions are such that they substantially fill out the recesses in order to displace any meltable medium in the recesses.

The medium, including the medium in the recesses which provide flow channels for the meltable medium, is thus displaced to the greatest possible extent, and in addition to the residual amount remaining in the container, the residual amount remaining in the apparatus, in particular in the piston, is also reduced. The protrusions substantially fill out the recesses, so configurations of the protrusions in which, for example, discharge or flow channels, or apertures for discharge and conveying are provided, must also be understood as protrusions according to the invention.

The protrusions preferably have a cross-section which tapers towards the premelter element.

Due to such tapering of the protrusions of the premelter element, any meltable medium in the recesses can flow laterally towards the displacement element and be displaced and conveyed by the latter out of the interior of the container.

The displacement element preferably has at least one discharge channel for discharging the molten medium from inside the container.

It is thus proposed, according to the invention, that the medium displaced by the displacement element can be supplied directly to a discharge channel and flows through the latter out of the interior of the container. A more compact design of the piston is thus proposed, and the flow path of the medium is reduced such that the residual amount remaining in pipelines is further reduced.

The displacement element preferably has sealing means which act against the inner surface of the container so that the medium flows through the discharge channel in a directed manner.

It is also preferred that the discharge channel is fluidically connectable to a pipeline for the molten medium, preferably to a pipeline connected to a pump unit.

The meltable medium can therefore be supplied to a pipeline, and devices for further processing of the medium, such as a pump unit or a metering unit, can also be provided.

It is preferable that the displacement element is stationarily mounted on the piston and is coupled to the premelter element by means of a guide means, in particular by means of a linear guide.

Due to the displacement element being stationarily mounted, it can be introduced into the container with the same speed, i.e. with the same stroke, as the rest of the piston. The coupled premelter element, which according to the invention is movably mounted relative to the displacement element, is guided in its movement by the guide means. This guide means is preferably a linear guide, such that the premelter element can move in a straight line relative to the displacement element.

In one advantageous development of the invention, the apparatus also comprises a drive unit which is connected to the guide means for moving the premelter element relative to the displacement element.

This means that the premelter element does not necessarily have to be inserted into the container with the same speed, i.e. with the same stroke, as the rest of the piston, but can be moved with a stroke that can be adjusted separately from the latter. The distance between the premelter element and the displacement element can therefore be varied independently of the set stroke of the piston. Due to this variable distance, mixing of the meltable medium in the molten state is improved, and the residual amount remaining in the premelter element is reduced by being displaced by the premelter element.

According to another advantageous development of the invention, the apparatus further comprises a restoring element for providing a restoring force acting on the premelter element, wherein the restoring force is directed away from the displacement element.

An apparatus is thus proposed which provides a variable distance between the premelter element and the displacement element in a simple and expedient manner by means of a restoring element. Due to this variable distance, mixing of the meltable medium in the molten state is improved, and the residual amount remaining in the premelter element is reduced by being displaced by the premelter element.

According to another advantageous development of the invention, the apparatus further comprises a heating unit having at least one heating means for heating the piston, wherein the heating means is preferably arranged in the premelter element and/or in the displacement element.

A more compact design, firstly, is realised by introducing a heating unit directly into the apparatus. Arranging heating means in the premelter element and/or in the displacement element also provides direct heating of those components of the piston that are in contact with the meltable medium, so that losses due to the conduction of heat are reduced.

The heating unit preferably has at least one detection means for measuring a temperature, in particular in the region of the premelter element and/or the displacement element.

The detection means for measuring a temperature thus provide a possible parameter for temperature control by the heating unit.

According to another advantageous development of the invention, the apparatus also has at least one receiving means for receiving and positioning the container relative to the piston.

The operational reliability of the apparatus is increased by such a receiving means, because the container is correctly positioned relative to the piston by the receiving means. The holding means may be in the form of half shells and/or may have at least one band, which clasps at least partially around the container to fix it in place.

According to another aspect of the invention, the object of the invention is achieved by a method for melting and conveying a meltable medium in a container, in particular a hot melt adhesive contained in a drum, said method comprising the steps of: a) introducing a heatable piston into a container; b) moving the piston towards the bottom of the container; c) melting the meltable medium by means of a premelter element; d) displacing the meltable medium by means of a displacement element; e) moving the premelter element relative to the displacement element, in particular towards the displacement element; f) moving the displacement element towards the bottom of the container; and g) conveying the molten medium.

As regards the advantages of such a method, reference is made to the observations in the foregoing.

In a method for melting and conveying a meltable medium in a container, the medium is melted by introducing a heatable piston, and the molten, liquefied medium can be conveyed out of the container. When a premelter element moves towards the bottom of the container, the medium is melted in the process and is not displaced from the interior of the container until it is caused by movement of the displacement element. The movement of the displacement element relative to the premelter element allows the latter, at a distance from the displacement element, to melt the meltable medium in regions which are difficult to access, such as the bottom of the container, so that the displacement element can then displace such medium.

In one advantageous development of the invention, the method further comprises the following steps after step f): introducing at least one protrusion of the displacement element into at least one corresponding recess in the premelter element, and displacing molten medium in the recess of the premelter element through the corresponding protrusion of the displacement element.

A method of this kind utilises the realisation that, as a result of the medium being displaced through the recesses of the premelter element by protrusions of the displacement element, any residual amount of medium remaining on the piston is reduced, and the total amount of molten material available is increased.

The invention shall now be described on the basis of embodiments and with reference to the attached Figures, in which:
- Figure 1:: shows an apparatus for melting and conveying a meltable medium, in a first working position and in a perspective view, by way of example,
- Figure 2:: shows the apparatus for melting and conveying a meltable medium, in a second working position and in a perspective view, by way of example,
- Figure 3:: shows the apparatus for melting and conveying a meltable medium, in a first working position and in a cross-sectional view, by way of example,
- Figure 4:: shows the apparatus for melting and conveying a meltable medium in a second working position and in a cross-sectional view, by way of example,
- Figure 5:: shows an alternative embodiment of the apparatus for melting and conveying a meltable medium in a first working position and in a cross-sectional view, by way of example,
- Figure 6:: shows the apparatus for melting and conveying a meltable medium according to Figure 3, in a second working position and in a cross-sectional view, by way of example,
- Figure 7a:: shows a premelter element according to Figure 1, in a first top view, by way of example,
- Figure 7b:: shows a premelter element according to Figure 1, in a cross-sectional view, by way of example,
- Figure 7c:: shows a premelter element according to Figure 1, in a side view, by way of example,
- Figure 8a:: shows a displacement element according to Figure 1, in a top view, by way of example,
- Figure 8b:: shows a displacement element according to Figure 1, in a second top view, by way of example,
- Figure 8c:: shows a displacement element according to Figure 1, in a side view, by way of example,
- Figure 9:: shows the apparatus for melting and conveying a meltable medium, with a receiving means for receiving and positioning, and
- Figure 10:: shows the apparatus for melting and conveying a meltable medium in a cross-sectional view, with receiving means for receiving and positioning.

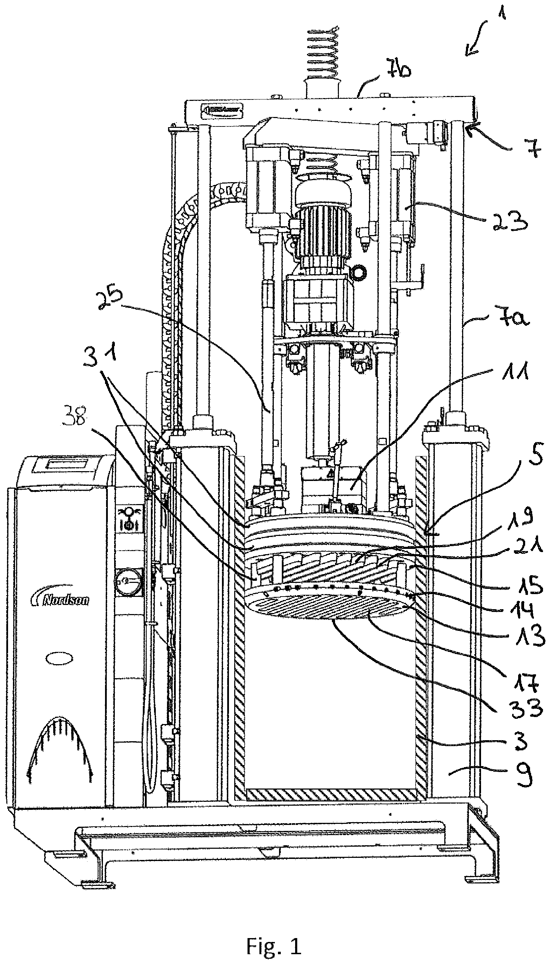

Figure 1 shows an apparatus 1 for melting and conveying a hot melt adhesive received in a container 3. Apparatus 1 comprises a piston 5 for melting and conveying the meltable medium, a piston support structure 7 for supporting piston 5, and a piston drive means 9 for driving piston 5.

Piston support structure 7 includes a piston guide 7a for guiding movable piston 5, and a piston support 7b for supporting piston 5 and for coupling piston 5 to piston guides 7a. Piston guide 7a is coupled to piston drive means 9.

Each piston guide 7a is embodied as a rod which is inserted at least partially into piston drive means 9. Piston drive means 9 is provided in the form of a pneumatic actuator. Piston guides 7a provided laterally from container 3 and piston 5 are connected to piston support 7b at their end facing away from piston drive means 9.

Piston 5 includes a heating unit 11 for heating piston 5 in order to melt the meltable medium in container 3.

Piston 5 has a cross-section, in this round, which corresponds to the shape of container 3. Piston 5 also has a premelter element 13 for melting the meltable medium and a displacement element 15 for displacing the meltable medium.

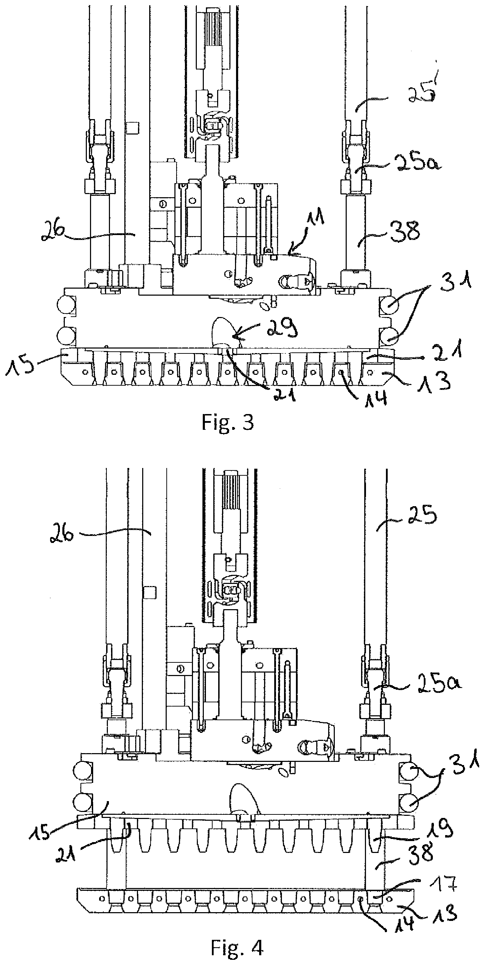

As shown in Figure 3, in particular, premelter element 13 has a plurality of substantially parallel elongate recesses 17. Premelter element 13 has recesses 14 laterally along its perimeter for receiving heating means of heating unit 11. These recesses 14 for the heating correspond to recesses 17.

Displacement element 15 has a plurality of corresponding elongate protrusions 19. Displacement element 15 also has a plurality of discharge channels 21 which have a round cross-section.

The surface of premelter element 13 and of displacement element 15 is increased by the elongate form of recesses 17 and protrusions 19, thus enhancing the flow of heat due to heat conduction.

At the perimeter of piston 5, two vertically spaced-apart seals 31 are arranged, which are adapted to seal piston 5 and in particular displacement element 15, such that the molten medium can leave the interior of the container only through discharge channels 21.

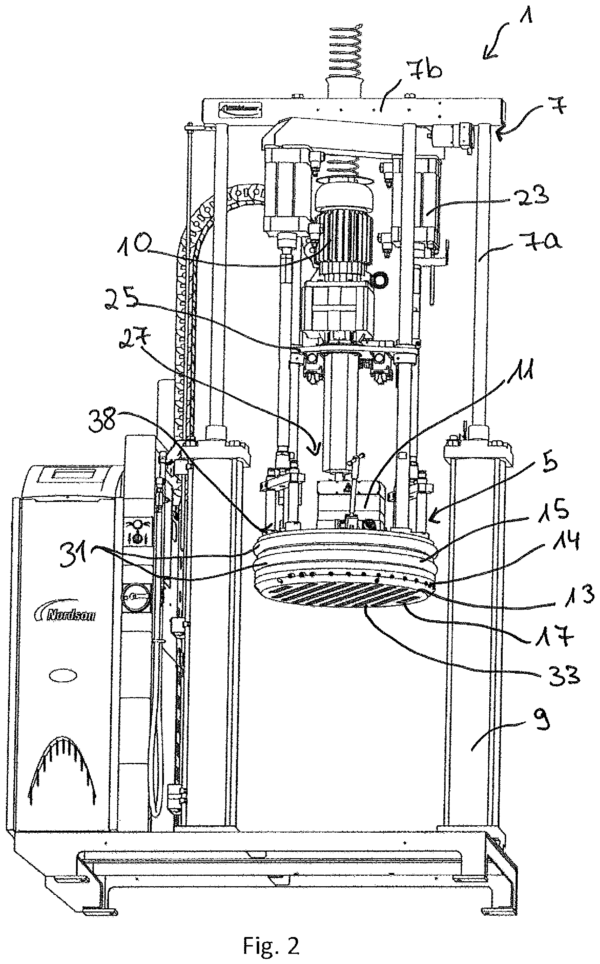

As shown in particular in Figure 2 and in the cross-sectional view in Figure 4, premelter element 13 is movably mounted and is driven by means of a drive unit 23 which is coupled to guide means 25 for linear guidance of premelter element 13.

The stroke of premelter element 13 can thus be adjusted independently of the stroke of piston 5. The protrusions 19 of displacement element 15 can be inserted and removed again by movement of premelter element 13 into the recesses 17 of premelter element 13. Electric motor 10 drives a pump unit 27 which pumps the molten medium.

As can be seen from the cross-sectional views in Figures 3 and 4, piston 5 is connected to pump unit 27 of apparatus 1. The discharge channels 21 of displacement element 15 are in fluid communication with pump unit 27 via a pipeline 29 in order to feed the molten medium out of the interior of container 3 to a metering or application unit. Guide means 25 are connected to hollow guide means 38 by a coupling means 25a. The hollow guide means 38 are connected to premelter element 13 and pass through four evenly distributed holes 39 in displacement element 15.

Seals 31 are arranged vertically spaced apart from each other at the perimeter of piston 5.

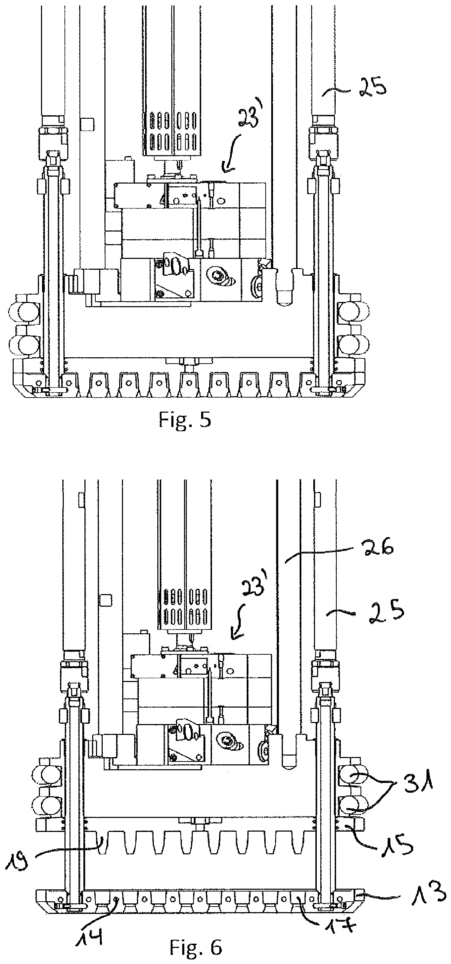

Figures 5 and 6 show cross-sectional views of an alternative embodiment of the apparatus for melting and conveying a meltable medium, by way of example in a first and a second working position.

The alternative embodiment of the apparatus differs from the apparatus shown in Figures 1 - 4 by a restoring element 23' for applying a restoring force onto premelter element 13. The restoring force applied is directed away from displacement element 15. A drive means for premelter element 13 can be dispensed with by providing such a restoring element 23'. Displacement element 15 does not approach premelter element 13 until premelter element 13 meets a resistance which exerts a force exceeding the restoring force on premelter element 13.

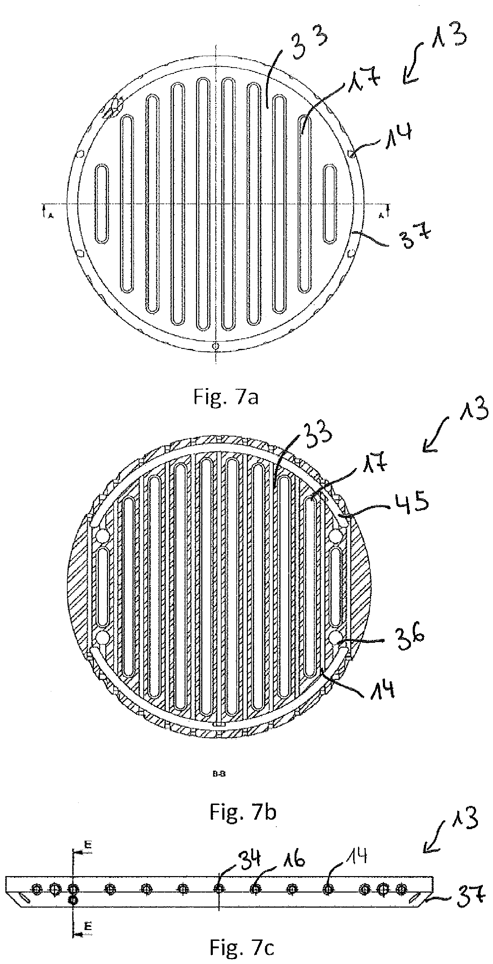

Figures 7a, b and c show views of premelter element 13. Premelter element 13 has a plurality of elongate and parallel recesses 17, the length of each recess 17 corresponding to the cross-sectional area of premelter element 13. Premelter element 13 has a round cross-section corresponding to container 3. Recesses 17 are arranged at regular distances apart. Webs 33, the width of which is substantially equal to the width of recesses 17, are left between recesses 17.

As can be seen from cross-sectional view in Figure 7b, in particular, premelter element 13 has recesses 14 for heating means and detection means in the region of webs 33. Recesses 14 are elongate and parallel to each other. Recesses 14 run in a straight line from a first position at the perimeter of premelter element 13 to a second position at the perimeter of premelter element 13.

Premelter element 13 also has four recesses 35 which correspond to each other. Recesses 35 can be brought into engagement with guide means 25.

The heating means are electrically powered, wherein the cables are guided through a cable channel 45 formed in premelter element 13 and run through an opening 36 into the hollow guide means 38.

As is shown by the side view in Figure 7c, premelter element 13 is embodied here as a plate which has a bevel 37 on the one side facing away from the displacement element 15.

In Figure 7c, heating means 16 and detection means 34 are arranged in recesses 14 and correspond to the shape of recesses 14.

Due to premelter element 13 being embodied as a plate, the weight of piston 5 is reduced and a large contact surface is simultaneously provided for melting the meltable medium. Providing a bevel 37 facilitates the movement of piston 5 in the container, in particular of premelter element 13. More specifically, any blocking of piston 5 by a potential unbalance in piston guide 7a is prevented, because bevel 37 ensures that piston 5 is evenly balanced when piston 5 is inserted into container 3.

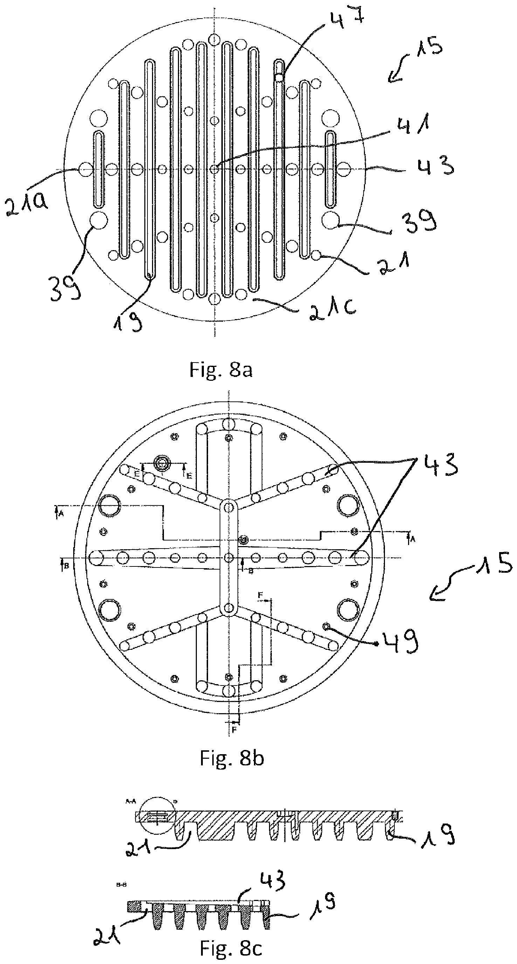

Figures 8a, b and c show views of displacement element 15. Displacement element 15 has a round cross-section and a plurality of elongate and parallel protrusions 19, the length of each protrusion 19 corresponding to the cross-sectional area of displacement element 15. Protrusions 19 are arranged at regular distances apart.

Displacement element 15 includes milled grooves 43 for merging the flows of molten medium flowing through discharge channels 21a, 21b and 21c.

In displacement element 15 of piston 5, there are also vent holes 47 for air cooling piston 5.

According to Figure 8b, protrusions 19 have a cross-section which tapers towards premelter element 13.

A plurality of discharge channels 21 is formed between protrusions 19. Discharge channels 21 have a round cross-section. A series of discharge channels 21a extends orthogonally to protrusions 19 along the radius of displacement element 15. Discharge channels 21a have a cross section that increases towards the outer perimeter of displacement element 15. There are two spaced-apart discharge channels 21b corresponding to each of these discharge channels 21a, the distance of discharge channels 21b to discharge channels 21a increasing from the centre 41 towards the perimeter 43 of displacement element 15. As the distance of discharge channels 21b from discharge channels 21a increases, so also does the cross-section of discharge channels 21a. In webs 33 in the middle, which are consequently the longest, there are two discharge channels 21c spaced apart from discharge channels 21a and 21b, respectively. A displaced, evenly discharged medium flowing through discharge channels 21a, 21b and 21c is thus provided over the cross-section of premelter element 15.

Displacement element 15 also has the four evenly distributed holes 39 which are adapted to let the guide means of premelter element 13 pass through and to be coupled to said guide means.

As the side view in Figure 8c shows, displacement element 15 is embodied here as a plate which has protrusions 19 on the one side facing away from premelter element 13.

Due to displacement element 15 being embodied as a plate, the weight of piston 5 is reduced and a large contact surface is simultaneously provided for melting and displacing the meltable medium.

Fixing holes 49 are formed in displacement element 15 for fixing displacement element 15 to heating unit 11.

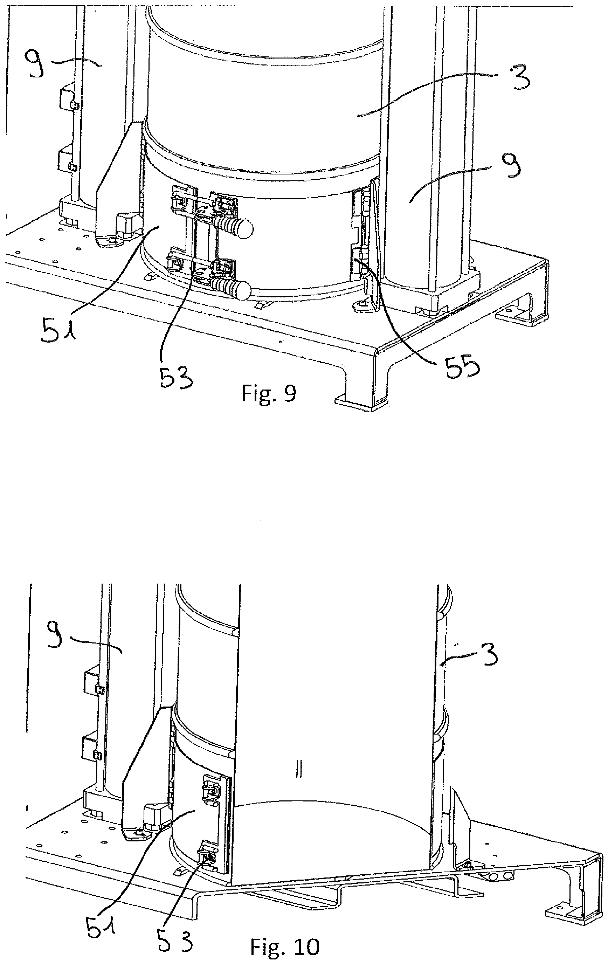

Figures 9 and 10 show an advantageous development of the invention, in which apparatus 1' also includes at least one receiving means 51 for receiving and positioning container 3 relative to piston 5.

Receiving means 51 is in the form of a collar and surrounds container 3 at least partially.

Receiving means 51 has at least one opening which can be locked by hinge mechanisms 53. Receiving means 51 is also pivotable about at least one joint 55 in order to open and close it.

## Claims

1. Apparatus (1) for melting and conveying a meltable medium received in a container (3), in particular a hot melt adhesive received in a drum, comprising a heatable piston (5) for melting and displacing the meltable medium, which piston can be introduced into the container (3) and moved, in particular towards the bottom of the container (3a),
wherein the piston (5) has
- a displacement element (15) for displacing the meltable medium, and
- a premelter element (13) for melting the meltable medium,
**characterized in that**
the premelter element (13) is movably mounted relative to the displacement element (15).

2. The apparatus (1) according claim 1,
wherein the displacement element (15) is arranged substantially parallel to the premelter element (13).

3. The apparatus (1) according to one of the preceding claims,
wherein the premelter element (13) has at least one recess which is adapted to provide a flow channel for the meltable medium, and
the displacement element (15) has at least one corresponding protrusion which can be introduced into the recess of the premelter element (13).

4. The apparatus (1) according to claim 3,
wherein the height of the protrusions (19) matches the height of the recesses (17), and
the displacement element (15) and the premelter element (13) form a substantially planar surface at the distal end of the piston (5) when the protrusions (19) of the displacement element (15) are introduced into the recesses (17) of the premelter element (13).

5. The apparatus (1) according to claim 3 or 4,
wherein the recesses (17) and the corresponding protrusions (19) are elongate and preferably parallel, in particular lamellar.

6. The apparatus (1) according to one of the claims 3 to 5,
wherein the protrusions (19) are such that they substantially fill out the recesses (17) in order to displace any meltable medium in the recesses (17).

7. The apparatus (1) according to claim 6,
wherein the protrusions (19) have a cross-section which tapers towards the premelter element (13).

8. The apparatus (1) according to one of the preceding claims,
wherein the displacement element (15) has at least one discharge channel (21) for discharging the molten medium from inside the container (3).

9. The apparatus (1) according to claim 8,
wherein the discharge channel (21) is fluidically connectable to a pipeline (29) for the molten medium, preferably to a pipeline (29) connected to a pump unit (27).

10. The apparatus (1) according to one of the preceding claims,
wherein the displacement element (15) is stationarily mounted on the piston (5) and is coupled to the premelter element (13) by means of a guide means (25), in particular by means of a linear guide.

11. The apparatus (1) according to claim 10, further comprising
- a drive unit (23) operatively connected to the guide means (25), for moving the premelter element (13) relative to the displacement element (15).

12. The apparatus (1) according to claim 10, further comprising
- a restoring element (23') for providing a restoring force acting on the premelter element (13), wherein the restoring force is directed away from the displacement element (15).

13. The apparatus (1) according to one of the preceding claims, further comprising
- a heater unit (11) having at least one heating means (16) for heating the piston (5),
wherein the heating means (16) is preferably arranged in the premelter element (13) and/or in the displacement element (15) and in particular can be electrically operated.

14. The apparatus (1) according to one of the preceding claims,
wherein the heating unit (11) has at least one detection means, preferably a thermal element and/or an ohmmeter, for measuring a temperature, in particular in the region of the premelter element (13) and/or the displacement element (15).

15. A method for melting and conveying a meltable medium in a container (3), in particular a hot-melt adhesive contained in a drum, said method comprising the steps of:
a) introducing a heatable piston (5) into a container (3), and
b) moving the piston (5) towards of the bottom of the container (3a),
c) melting the meltable medium by means of a premelter element (13);
d) displacing the meltable medium by means of a displacement element (15);
e) moving the premelter element (13) relative to the displacement element, in particular towards the displacement element (15);
f) moving the displacement element (15) towards the bottom of the container (3a);
g) conveying the molten medium.

16. The method according to claim 15, further comprising the following steps after step f):
- introducing at least one protrusion (19) of the displacement element (15) into at least one corresponding recess (17) in the premelter element (13); and
- displacing molten medium in the recess (17) of the premelter element (13) through the corresponding protrusion (19) of the displacement element (15).

## Patentansprüche

1. Vorrichtung (1) zum Schmelzen und Fördern eines in einem Behälter (3) aufgenommenen schmelzbaren Mediums, insbesondere eines Heißschmelzklebstoffs, der in einer Trommel aufgenommen ist, mit
einem beheizbaren Kolben (5) zum Schmelzen und Verdrängen des schmelzbaren Mediums, wobei der Kolben in den Behälter (3) eingeführt und bewegt werden kann, insbesondere in Richtung des Bodens des Behälters (3a),
wobei der Kolben (5) aufweist
- ein Verdrängungselement (15) zum Verdrängen des schmelzbaren Mediums, und
- ein Vorschmelzelement (13) zum Schmelzen des schmelzbaren Mediums,
**dadurch gekennzeichnet,**
**dass** das Vorschmelzelement (13) relativ zu dem Verdrängungselement (15) beweglich montiert ist.

2. Die Vorrichtung (1) nach Anspruch 1, wobei das Verdrängungselement (15) im Wesentlichen parallel zu dem Vorschmelzelement (13) angeordnet ist.

3. Die Vorrichtung (1) nach einem der vorstehenden Ansprüche,
wobei das Vorschmelzelement (13) mindestens eine Ausnehmung aufweist, welche dazu angepasst ist, einen Strömungskanal für das schmelzbare Medium bereitzustellen, und
das Verdrängungselement (15) mindestens einen korrespondierenden Vorsprung aufweist, der in die Ausnehmung des Vorschmelzelements (13) eingeführt werden kann.

4. Die Vorrichtung (1) nach Anspruch 3,
wobei die Höhe der Vorsprünge (19) mit der Höhe der Ausnehmungen (17) übereinstimmt und das Verdrängungselement (15) und das Vorschmelzelement (13) eine im Wesentlichen ebene Fläche am distalen Ende des Kolbens (5) bilden, wenn die Vorsprünge (19) des Verdrängungselements (15) in die Ausnehmungen (17) des Vorschmelzelements (13) eingeführt sind.

5. Die Vorrichtung (1) nach Anspruch 3 oder 4, wobei die Ausnehmungen (17) und die korrespondierenden Vorsprünge (19) langgestreckt und vorzugsweise parallel, insbesondere lamellenförmig sind.

6. Die Vorrichtung (1) nach einem der Ansprüche 3 bis 5,
wobei die Vorsprünge (19) so beschaffen sind, dass sie die Ausnehmungen (17) im Wesentlichen ausfüllen, um jedes schmelzbare Medium in den Vertiefungen (17) zu verdrängen.

7. Die Vorrichtung (1) nach Anspruch 6,
wobei die Vorsprünge (19) einen Querschnitt aufweisen, der sich in Richtung des Vorschmelzelements (13) verjüngt.

8. Die Vorrichtung (1) nach einem der vorstehenden Ansprüche,
wobei das Verdrängungselement (15) mindestens einen Ausgabekanal (21) zum Ausgeben des geschmolzenen Mediums aus dem Inneren des Behälters (3) aufweist.

9. Die Vorrichtung (1) nach Anspruch 8,
wobei der Ausgabekanal (21) fluidleitend mit einer Rohrleitung (29) für das geschmolzene Medium verbindbar ist, vorzugsweise mit einer Rohrleitung (29), die mit einer Pumpeneinheit (27) verbunden ist.

10. Die Vorrichtung (1) nach einem der vorstehenden Ansprüche,
wobei das Verdrängungselement (15) ortsfest am Kolben (5) montiert ist und mittels eines Führungselements (25) mit dem Vorschmelzelement (13) gekoppelt ist, insbesondere mittels einer Linearführung.

11. Die Vorrichtung (1) nach Anspruch 10, ferner aufweisend
- eine Antriebseinheit (23), die betriebsmäßig mit dem Führungsmittel (25) verbunden ist, um das Vorschmelzelement (13) relativ zum Verdrängungselement (15) zu bewegen.

12. Die Vorrichtung (1) nach Anspruch 10, ferner aufweisend
- ein Rückstellelement (23') zum Bereitstellen einer Rückstellkraft, die auf das Vorschmelzelement (13) wirkt, wobei die Rückstellkraft vom Verdrängungselement (15) weg gerichtet ist.

13. Die Vorrichtung (1) nach einem der vorstehenden Ansprüche, ferner aufweisend
- eine Heizeinheit (11) mit mindestens einem Heizelement (16) zum Aufheizen des Kolbens (5),
wobei das Heizelement (16) vorzugsweise in dem Vorschmelzelement (13) und/oder in dem Verdrängungselement (15) angeordnet ist und insbesondere elektrisch betrieben werden kann.

14. Die Vorrichtung (1) nach einem der vorsehenden Ansprüche,
wobei die Heizeinheit (11) zumindest ein Erfassungsmittel, vorzugsweise ein Thermoelement und/oder ein Ohmmeter, zur Messung einer Temperatur aufweist, insbesondere im Bereich des Vorschmelzelements (13) und/oder des Verdrängungselements (15).

15. Ein Verfahren zum Schmelzen und Transport eines schmelzbaren Mediums in einem Container (3), insbesondere eines Heißschmelzklebstoffs, der in einer Trommel aufgenommen ist, wobei das Verfahren die Schritte aufweist:
a) Einführen eines heizbaren Kolbens (5) in einen Behälter (3) und
b) Bewegen des Kolbens (5) in Richtung des Bodens des Behälters (3a),
c) Schmelzen des schmelzbaren Mediums mittels eines Vorschmelzelements (13);
d) Verdrängen des schmelzbaren Mediums mittels eines Verdrängungselements (15);
e) Bewegen des Vorschmelzelements (13) relativ zu dem Verdrängungselement, insbesondere in Richtung des Verdrängungselements (15);
f) Bewegen des Verdrängungselements (15) in Richtung des Bodens des Behälters (3a);
g) Fördern des geschmolzenen Mediums.

16. Das Verfahren nach Anspruch 15, ferner aufweisend die folgenden Schritte nach dem Schritt f):
- Einführen mindestens eines Vorsprungs (19) des Verdrängungselements (15) in mindestens eine korrespondierende Ausnehmung (17) in dem Vorschmelzelement (13); und
- Verdrängen von geschmolzenem Medium in der Ausnehmung (17) des Vorschmelzelements (13) durch den korrespondierenden Vorsprung (19) des Verdrängungselements (15).

## Revendications

1. Appareil (1) pour faire fondre et transporter un milieu fusible reçu dans un contenant (3), en particulier un adhésif thermofusible reçu dans un tambour,
comprenant un piston (5) pouvant être chauffé pour faire fondre et déplacer le milieu fusible, lequel piston peut être introduit dans le contenant (3) et mis en mouvement, en particulier vers le fond du contenant (3a),
dans lequel le piston (5) a
- un élément de déplacement (15) pour déplacer le milieu fusible, et
- un élément de préfusion (13) pour faire fondre le milieu fusible,
**caractérisé en ce que**
l'élément de préfusion (13) est monté de manière mobile par rapport à l'élément de déplacement (15).

2. Appareil (1) selon la revendication 1,
dans lequel l'élément de déplacement (15) est agencé sensiblement parallèle à l'élément de préfusion (13) .

3. Appareil (1) selon l'une des revendications précédentes,
dans lequel l'élément de préfusion (13) a au moins un évidement qui est adapté pour fournir un canal d'écoulement pour le milieu fusible, et
l'élément de déplacement (15) a au moins une saillie correspondante qui peut être introduite dans l'évidement de l'élément de préfusion (13).

4. Appareil (1) selon la revendication 3,
dans lequel la hauteur des saillies (19) coïncide avec la hauteur des évidements (17), et
l'élément de déplacement (15) et l'élément de préfusion (13) forment une surface sensiblement plane à l'extrémité distale du piston (5) lorsque les saillies (19) de l'élément de déplacement (15) sont introduites dans les évidements (17) de l'élément de préfusion (13).

5. Appareil (1) selon la revendication 3 ou 4,
dans lequel les évidements (17) et les saillies (19) correspondantes sont allongés et de préférence parallèles, en particulier lamellaires.

6. Appareil (1) selon l'une des revendications 3 à 5,
dans lequel les saillies (19) sont telles qu'elles remplissent sensiblement les évidements (17) afin de déplacer un quelconque milieu fusible dans les évidements (17).

7. Appareil (1) selon la revendication 6,
dans lequel les saillies (19) ont une coupe transversale qui se resserre vers l'élément de préfusion (13) .

8. Appareil (1) selon l'une des revendications précédentes,
dans lequel l'élément de déplacement (15) a au moins un canal de déversement (21) pour déverser le milieu fondu depuis l'intérieur du contenant (3).

9. Appareil (1) selon la revendication 8,
dans lequel le canal de déversement (21) est raccordable de manière fluidique à une canalisation (29) pour le milieu fondu, de préférence à une canalisation (29) raccordée à une unité de pompage (27).

10. Appareil (1) selon l'une des revendications précédentes,
dans lequel l'élément de déplacement (15) est monté de manière fixe sur le piston (5) et est accouplé à l'élément de préfusion (13) au moyen d'un moyen de guidage (25), en particulier au moyen d'un guide linéaire.

11. Appareil (1) selon la revendication 10, comprenant en outre
- une unité d'entraînement (23) raccordée fonctionnellement au moyen de guidage (25), pour mettre en mouvement l'élément de préfusion (13) par rapport à l'élément de déplacement (15).

12. Appareil (1) selon la revendication 10, comprenant en outre
- un élément de restauration (23') pour fournir une force de restauration agissant sur l'élément de préfusion (13), dans lequel la force de restauration est dirigée à l'opposé de l'élément de déplacement (15).

13. Appareil (1) selon l'une des revendications précédentes, comprenant en outre
- une unité de chauffage (11) ayant au moins un moyen de chauffage (16) pour chauffer le piston (5), dans lequel le moyen de chauffage (16) est de préférence agencé dans l'élément de préfusion (13) et/ou dans l'élément de déplacement (15) et en particulier peut fonctionner électriquement.

14. Appareil (1) selon l'une des revendications précédentes,
dans lequel l'unité de chauffage (11) a au moins un moyen de détection, de préférence un élément thermique et/ou un ohmmètre, pour mesurer une température, en particulier dans la région de l'élément de préfusion (13) et/ou l'élément de déplacement (15).

15. Procédé pour faire fondre et transporter un milieu fusible dans un contenant (3), en particulier un adhésif thermofusible contenu dans un tambour, ledit procédé comprenant les étapes de :
a) introduction d'un piston (5) pouvant être chauffé dans un contenant (3), et
b) mise en mouvement du piston (5) vers le fond du contenant (3a),
c) fusion du milieu fusible au moyen d'un élément de préfusion (13) ;
d) déplacement du milieu fusible au moyen d'un élément de déplacement (15) ;
e) mise en mouvement de l'élément de préfusion (3) par rapport à l'élément de déplacement, en particulier vers l'élément de déplacement (15) ;
f) mise en mouvement de l'élément de déplacement (15) vers le fond du contenant (3a) ;
g) transport du milieu fondu.

16. Procédé selon la revendication 15, comprenant en outre les étapes suivantes après l'étape f) :
- l'introduction d'au moins une saillie (19) de l'élément de déplacement (15) dans au moins un évidement (17) correspondant dans l'élément de préfusion (13) ; et
- le déplacement du milieu fondu dans l'évidement(17) de l'élément de préfusion (13) par le biais de la saillie (19) correspondante de l'élément de déplacement (15).
